(19)

**Europäisches Patentamt**
**European Patent Office**
**Office européen des brevets**

(11) **EP 2 566 272 A1**

(12) **EUROPEAN PATENT APPLICATION**
published in accordance with Art. 153(4) EPC

(43) Date of publication:
**06.03.2013 Bulletin 2013/10**

(51) Int Cl.:
***H04W 72/08*** (2009.01)

(21) Application number: **10850493.7**

(22) Date of filing: **29.04.2010**

(86) International application number:
**PCT/CN2010/072344**

(87) International publication number:
**WO 2011/134160 (03.11.2011 Gazette 2011/44)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventors:
• **ZHOU, Hua**
**Beijing 100025 (CN)**
• **ZHANG, Jie**
**Beijing 100025 (CN)**

• **ZHANG, Yuantao**
**Beijing 100025 (CN)**
• **WANG, Jian**
**Beijing 100025 (CN)**
• **WU, Jianming**
**Beijing 100025 (CN)**

(74) Representative: **Schultes, Stephan**
**Haseltine Lake LLP**
**300 High Holborn**
**London WC1V 7JH (GB)**

(54) **METHOD FOR FEEDING BACK PRECODING MATRIX INFORMATION AND MOBILE STATION THEREOF**

(57)    A method for feeding back pre-coding matrix information and a mobile station thereof are provided. The method includes: determining multiple kinds of pre-coding matrix information corresponding to multiple multi-input multi-output (MIMO) modes; and feeding back multiple kinds of pre-coding matrix information. The present invention can feedback pre-coding matrix information adapting for multiple multi-input multi-output modes.

S402 → Determine multiple kinds of pre-coding matrix information corresponding to multiple multi-input multi-output modes

S404 → Feed back multiple kinds of pre-coding matrix information

**Fig. 4**

**Description**

**Field of the Invention**

The present invention relates to the field of a wireless communication system and in particular to a method for feeding back pre-coding matrix information and mobile station therefor.

**Background of the Invention**

In a wireless communication system, the technology of Multi-Input Multi-Output (MIMO) can be adopted for a base station in communication with a plurality of mobile stations when the base station is provided with a plurality of transmitting antennas and the mobile stations are provided with a plurality of receiving antennas.

With the use of the MIMO technology, the base station can perform optimum pre-coding if it can obtain information on a channel matrix between the base station and a mobile station, that is:

$X = Ws,$

Where W is a pre-coding matrix, s is a signal prior to transmission, and x is the pre-coded signal transmitted onto an antenna. The signal received by the mobile station receives over an MIMO channel is:

$r = HWs,$

Where H is the MIMO channel, and if H and W match well so that:

$$HW = \begin{bmatrix} a & 0 & 0 \\ 0 & ... & 0 \\ 0 & 0 & b \end{bmatrix},$$

It is easy for the receiver to demodulate s.

However, it is difficult for the base station to obtain H and thus difficult to estimate appropriate W in a real system. For this reason, the mobile station has to feed back some simplified channel information, and typically a pre-coding codebook known to the base station and the mobile station can be previously stored at the base station and the mobile station as follows:

$$C = \{W_1, W_2, ..., W_N\}.$$

The pre-coding codebook includes a number N of pre-coding matrixes W, and the sequence number of each W in the codebook is referred to as a Pre-coding Matrix Index (PMI). The mobile station itself estimate appropriate W by measuring an MIMO channel H and then feeds the sequence number of W in the codebook C back to the base station, and the base station obtaining the sequence number can search the codebook C for a really required weight matrix W. The pre-coding matrix index fed back from the mobile station can be regarded as one kind of pre-coding matrix information. Of course, the pre-coding codebook can be built from a plurality of separate coding matrixes or consisted of the concatenated coding matrixes, for example:

W=W1xW2,

Where W1 is a codeword in a separate codebook C1, W2 is a codeword in a separate codebook C2, the operator x can be a multiplication or another operation (e.g., a Kronecker product) of matrixes, and the separate codebooks C1 and C2 are information known to both a sender and a receiver. The receiver can feed back W1 and W2 respectively.

There are a variety of MIMO modes, for example, a Single User MIMO (SU-MIMO) mode where a sender transmits a plurality of data streams to a receiver for the purpose of improving the throughput of a single user; a Multiple User Mode (MU-MIMO) mode where a sender transmits a plurality of data streams to a plurality of receiver, each of which receives one or more streams, for the purpose of improving the throughout of a system; and a Multiple Cell MIMO mode where a plurality of senders transmit a plurality of data streams to a plurality of receivers, wherein the plurality of senders are located in different cells or other entities capable of transmitting data streams , and the plurality of receivers also located in coverage areas of different cells, for the purpose of improving the throughout or coverage area at the edge of a cell.

Different pre-coding matrix information may have to be fed back in multiple MIMO modes. Thus, a mechanism is desirable to accommodate feedback of pre-coding matrix information for multiple MIMO modes.

## Summary of the Invention

In order to address the foregoing technical problem, there is provided according to an aspect of the invention a method of feeding back pre-coding matrix information in a wireless communication system, which includes: determining multiple kinds of pre-coding matrix information corresponding to multiple multi-input multi-output (MIMO) modes; and feeding back the plurality of kinds of pre-coding matrix information.

According to another aspect of the invention, there is provide d a mobile station including: a determining unit configured to determine multiple kinds of pre-coding matrix information corresponding to multiple multi-input multi-output modes; and a feedback unit configured to feed back the plurality of kinds of pre-coding matrix information.

The invention can accommodate feedback of pre-coding matrix information for multiple MIMO modes.

These and further aspects and features of the invention will become more apparent from the following description and the drawings. In the description and the drawings, specific embodiments of the invention have been disclosed in details, and numerous ways in which the principle of the invention can be employed have been indicated. It shall be appreciated that the scope of the invention will not be limited thereto. The invention is intended to encompass numerous variations, modifications and equivalents without departing from the spirit and the scope of the appended claims.

A feature described and/or illustrated with respect to one embodiment can be used in one or more other embodiments in the same or similar way in combination or in place of a feature in the other embodiment(s).

It shall be emphasized that the term "include/comprise" as used in this context refers to presence of a feature, an integer, a step or a component but will not preclude presence or addition of one or more other features, integers, steps or components.

Numerous aspects of the invention will be better understood with reference to the drawings. Components in the drawings are not drawn in scale but merely intended to illustrate the principle of the invention. In order to facilitate illustration and description of some parts of the invention, corresponding parts in the drawings may be magnified, that is, they are made larger than other components in an illustrative apparatus manufactured in practice according to the invention. An element and a feature described in a drawing or an embodiment of the invention can be combined with an element and a feature illustrated in one or more other drawings or embodiments. Furthermore similar reference numerals in the drawings represent corresponding components in several drawings and can indicate corresponding components used in more than one embodiment.

## Brief Description of the Drawings

Preferred embodiments of the invention have been illustrated in the drawings which constitute a part of the specification and serve to further elucidate together with the description the principle of the invention in details and in which:

Fig.1 is a schematic diagram of a single-user MIMO mode;

Fig.2 is a schematic diagram of a multi-user MIMO mode;

Fig.3 is a schematic diagram of a multi-cell MIMO mode;

Fig.4 is a flow chart of a method of feeding back pre-coding matrix information according to an embodiment of the invention;

Fig.5 is a flow chart of a method of feeding back pre-coding matrix information according to another embodiment of the invention;

Fig.6 is a block diagram of a mobile station according to an embodiment of the invention; and

Fig.7 is a block diagram of a mobile station according to another embodiment of the invention.

## Detailed Description of the Invention

The invention will be described below in details with reference to the drawings, and it shall be noted that embodiments described later are merely intended to facilitate understanding of the invention but not to limit the invention in any way.

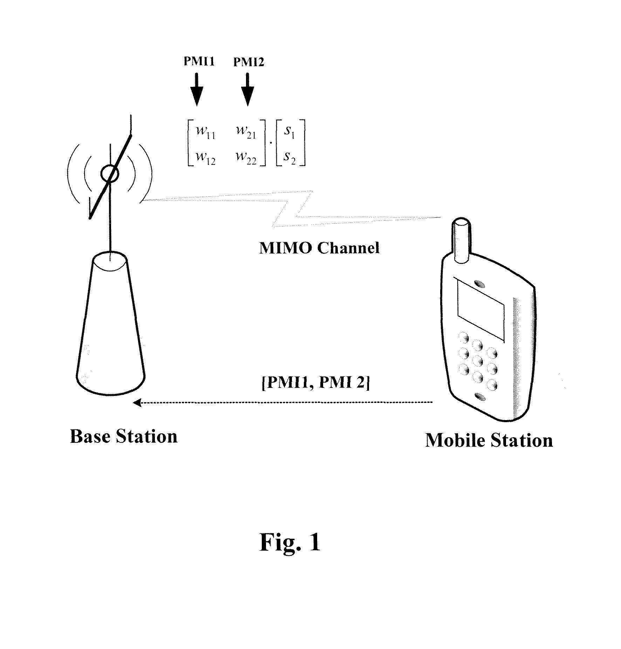

Fig.1 to Fig.3 illustrates several MIMO modes.

Fig.1 is a schematic diagram of a single-user MIMO mode in which a base station transmits multi-channel signals to a user using the same physical resource. The base station pre-codes the multi-channel signals respectively while transmitting the multi-channel signals. A PMI represents a specific pre-coding matrix in a codebook known to the base station and a mobile station and can be referred to as one kind of pre-coding matrix information. As illustrated in Fig.1, the mobile station feeds back PMI1 and PMI2 which indicate $\begin{bmatrix} w_{11} \\ w_{12} \end{bmatrix}$ and $\begin{bmatrix} w_{11} \\ w_{12} \end{bmatrix}$ respectively. The

$\begin{bmatrix} w_{11} \\ w_{12} \end{bmatrix}$ and $\begin{bmatrix} w_{21} \\ w_{22} \end{bmatrix}$ are used for weighting data streams s1 and s2 respectively. Since $\begin{bmatrix} w_{11} \\ w_{12} \end{bmatrix}$ and $\begin{bmatrix} w_{21} \\ w_{22} \end{bmatrix}$ are

vectors, they can also be referred to as a pre-coding vector. The mobile station can select the PMIs for transmission, for example, under a maximized capacity principle, a minimized transmission rate principle, etc., as can be embodied by those skilled in the art, so its detailed description will be omitted here. The base station pre-codes the data streams for transmission according to the fed-back PMIs.

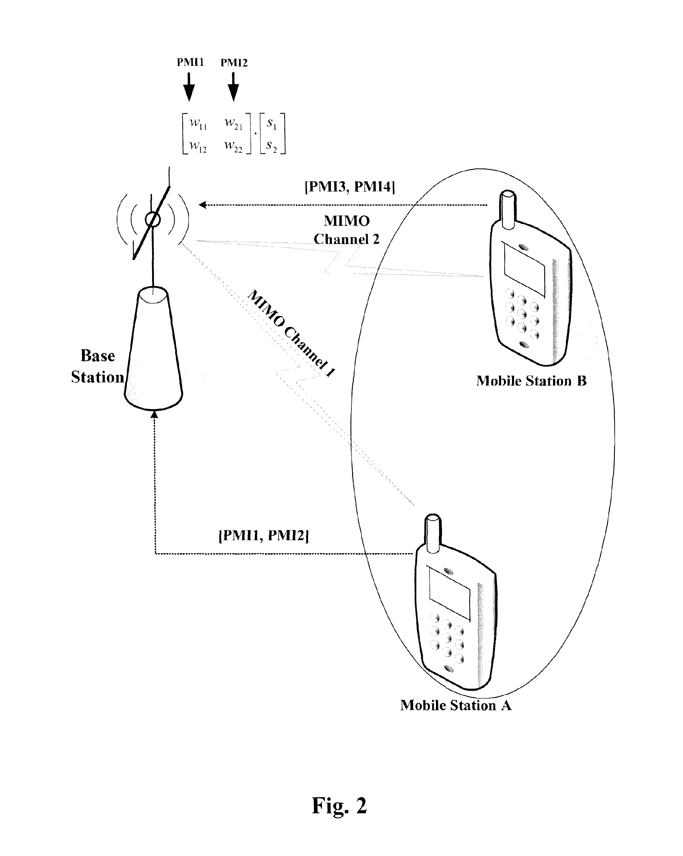

Fig.2 is a schematic diagram of a multi-user MIMO mode in which a base station transmits signals to a plurality of users. Data streams s1 and s2 are used for a mobile station A and a mobile station B. As illustrated in Fig.2, the mobile station A feeds back a PMI1 and a PMI2, and the mobile station B feeds back a PMI3 and a PMI4. One of the two PMIs fed back from each of the mobile stations is used for the feeding-back mobile station itself, and the other PMI is used for the other mobile station. It shall be noted that a larger number of mobile stations can be present although only two mobile stations are illustrated in Fig.2.

The MU-MIMO mode can be further divided into two modes, i.e., an MU-MIMO mode 1 and an MU-MIMO mode 2. In the MU-MIMO mode 1, the PMI1 transmitted from the mobile station A represents a pre-coding matrix desirable for use by the mobile station itself, and the transmitted PMI2 represents a pre-coding matrix desirable for use by the mobile station B (for example, insignificant interference to the mobile station A will arise if the mobile station B uses this pre-coding matrix). In the MU-MIMO mode 2, the PMI1 transmitted from the mobile station A represents a pre-coding matrix desirable for use by the mobile station itself, and the transmitted PMI2 represents a pre-coding matrix undesirable for use by the mobile station B (for example, significant interference to the mobile station A will arise if the mobile station B uses this pre-coding matrix).

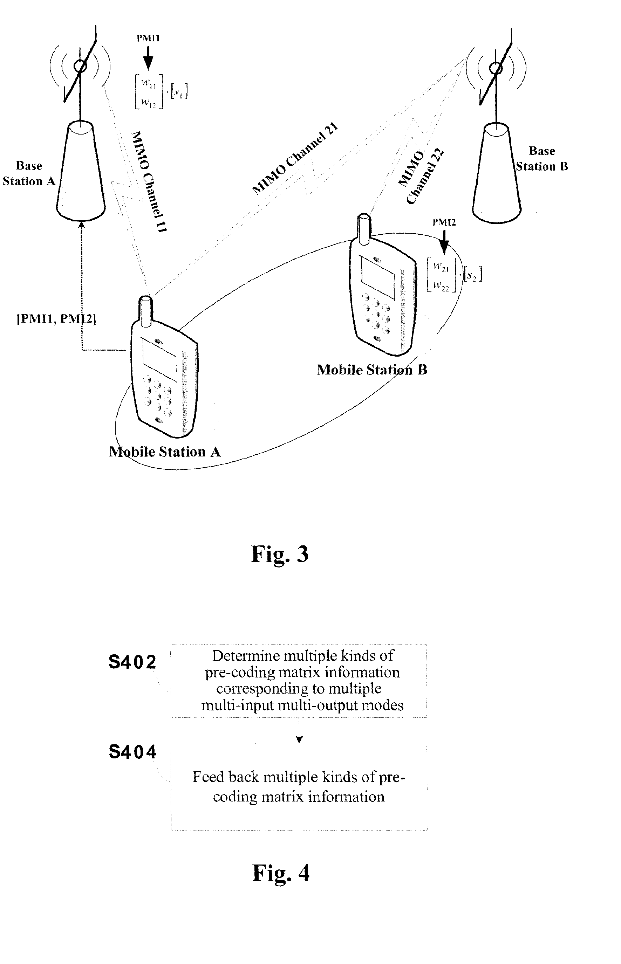

Fig.3 is a schematic diagram of a multi-cell MIMO mode in which a plurality of base stations transmit signals to a plurality of users in different cells. As illustrated in Fig.3, each mobile station feeds back two PMIs, for example, a mobile station A transmits a PMI1 and a PMI2. One of the two PMIs fed back from each of the mobile stations is used for the feeding-back mobile station itself, and the other PMI is used for the other mobile station.

The multi-cell MIMO mode can also be divided into two modes, i.e., a multi-cell MIMO mode 1 and a multi-cell MIMO mode 2. In the multi-cell MIMO mode 1, the PMI1 is a pre-coding vector desirable for the mobile station A to be used by a base station A of a cell where the mobile station A is located (also referred to a cell base station or a serving base station) to weight a signal transmitted thereto, and the PMI2 is a pre-coding vector desirable for the mobile station A to be used by a base station of another adjacent cell (also referred to as an adjacent base station) to weight a transmission signal over the same physical resource as the serving cell. For example, the mobiles station A feeds back the two PMIs to the cell base station, and then the cell base station transmits to the adjacent base station the PMI2 desirable for the user to be used by an adjacent cell user. The adjacent base station search its cell for the user by which the PMI2 is desirable for use, so as to further match this user (assumed as a mobile station B) with the mobile station A. In the multi-cell MIMO mode 2, the PMI1 is a pre-coding vector desirable for the mobile station A to be used by a base station A of a cell where the mobile station A is located (also referred to as a cell base station or a serving base station) to weight a signal transmitted thereto, and the PMI2 is a pre-coding vector undesirable for the mobile station A to be used by a base station of another adjacent cell (also referred to as an adjacent base station) to weight a transmission signal over the same physical resource as the serving cell.

It shall be noted that a larger number of cells can be present although only two cells are illustrated in Fig.3.

The several MIMO modes have been described above with reference to Fig.1 to Fig.3, but embodiments of the invention will not be limited to the foregoing several MIMO modes. As described above, for example, a codeword can be formed by cascading two or more separate codewords, and a mobile station also has to feed back two or more PMIs, but a PMI plays a different role from those in the several MIMO modes described above, we can regard this scheme as a new MIMO mode, which is one of various MIMO modes to be described in this context.

Moreover, reference can be made, for example, to Chinese Patent Application No. 200910141651.1, filed on

May 25, 2009 and entitled "-种用于 MIMO 系统的预 编码反馈方法和装置" for further details of the foregoing MIMO modes.

Fig.4 is a flow chart of a method of feeding back pre-coding matrix information in a wireless communication system according to an embodiment of the invention.

Multiple kinds of pre-coding matrix information corresponding to multiple multi-input multi-output modes is determined in step S402. The plurality of kinds of pre-coding matrix information is fed back in step S404.

As described above, there may be multiple multi-input multi-output (MIMO) modes in a wireless communication system. For the different MIMO modes, the corresponding pre-coding matrix information to be fed back can be determined respectively. In step S402, for example, a pre-coding matrix desirable for use by a mobile station itself is determined for the SU-MIMO mode; a pre-coding matrix desirable for use by a mobile station itself and a pre-coding matrix desirable for use by another mobile station in the same cell are determined for the MU-MIMO mode 1; a pre-coding matrix desirable for use by a mobile station itself and a pre-coding matrix undesirable for use by another mobile station in the same cell are determined for the MU-MIMO mode 2; a pre-coding matrix desirable for use by a mobile station itself and a pre-coding matrix desirable for use by another mobile station in an adjacent cell are determined for the multi-cell MIMO mode 1; a pre-coding matrix desirable for use by a mobile station itself and a pre-coding matrix undesirable for use by another mobile station in an adjacent cell are determined for the multi-cell MIMO mode 2. When the pre-coding matrix is determined, pre-coding matrix information can be determined to represent the pre-coding matrix. Further details of how to determine a pre-coding matrix in various MIMO modes is apparent to those skilled in the art, so a detailed description thereof will be omitted here.

The plurality of kinds of pre-coding matrix information determined in step S402 is fed back in step S404.

In an instance, the plurality of kinds of pre-coding matrix information can be fed back sequentially in a predetermined feedback order. That is, the various kinds of pre-coding matrix information is fed back in a predetermined order. For example, firstly the pre-coding matrix information corresponding to the SU-MIMO mode is fed back, and then the pre-coding matrix information corresponding to the MU-MIMO mode 1, the pre-coding matrix information corresponding to the MU-MIMO mode 2, the pre-coding matrix information corresponding to the multi-cell MIMO mode 1, the pre-coding matrix information corresponding to the multi-cell MIMO mode 2 are fed back sequentially.

In another instance, the plurality of kinds of pre-coding matrix information can be fed back at a predetermined feedback interval. That is, the various kinds of pre-coding matrix information are fed back at a predetermined interval. For example, the pre-coding matrix information for the SU-MIMO mode and the pre-coding matrix information for the MU-MIMO mode 1 can be fed back at a predetermined feedback interval of one sub-frame.

In another instance, the plurality of kinds of pre-coding matrix information can be fed back at a predetermined feedback period. For example, the pre-coding matrix information corresponding to the SU-MIMO mode can be fed back at a predetermined period of ten sub-frames, that is, fed back once for every ten sub-frames. The plurality of kinds of pre-coding matrix information can be fed back at the same or different periods.

Two or three of a feedback order, a feedback interval and a feedback period of the various kinds of pre-coding matrix information are predetermined in another instance.

Of course, feedback may not be necessary for all the MIMO modes. For example, the pre-coding matrix information corresponding to only the SU-MIMO mode and the MU-MIMO mode 1 can be determined in step S402 in an instance. Accordingly, the pre-coding matrix information corresponding to only the SU-MIMO mode and the MU-MIMO mode 1 is fed back in step S404.

This embodiment can accommodate feedback of pre-coding matrix information for multiple MIMO modes.

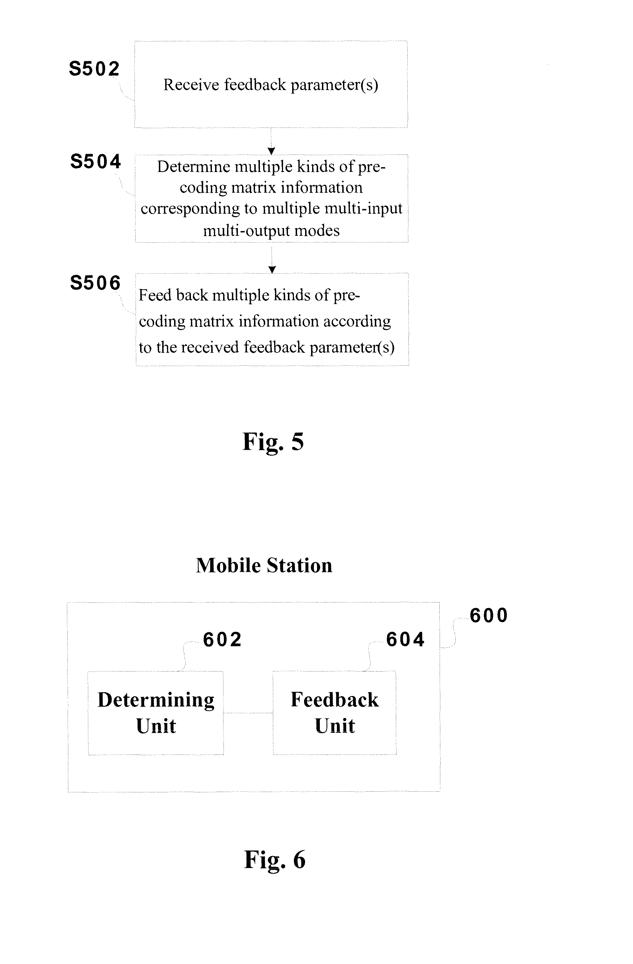

Fig.5 is a flow chart of a method of feeding back pre-coding matrix information in a wireless communication system according to another embodiment of the invention.

One or more of multi-input multi-output mode information, a feedback order, a feedback interval and a feedback period is received as feedback parameter(s) in step S502. Multiple kinds of pre-coding matrix information corresponding to multiple MIMO modes is determined in step S504. The plurality of kinds of pre-coding matrix information is fed back according to the feedback parameter(s) in step S506.

The above multi-input multi-output mode information represents MIMO modes desirable for a base station to be fed back from a mobile station. For example, only the SU-MIMO mode and the MU-MIMO mode 1 can be desirable for the base station to be fed back from the mobile station, and thus the base station can transmit MIMO mode information representing the SU-MIMO mode and the MU-MIMO mode 1 to the mobile station. In this embodiment, one or more of the multi-input multi-output mode information, the feedback order, the feedback interval and the feedback period can vary dynamically. In step S502, the mobile station can receive one or more of the multi-input multi-output mode information, the feedback order, the feedback interval and the feedback period from the base station as feedback parameter(s). The base station can transmit the feedback parameter(s) by broadcast. For example, the feedback parameters can be transmitted in instant message signaling. In step S504, if the MIMO mode information is received, for example, if the MIMO modes to be fed back are increased or decreased, the kinds of pre-coding matrix information to be determined can be increased or decreased accordingly. Further details of the step S504 are similar to those of the step S402 in Fig. 4, and a detailed description thereof will be omitted here. The plurality of kinds of pre-coding matrix information is fed back according to the feedback parameter in step S506. For example, feedback is made if the feedback parameter, representing that the feedback period for the pre-coding matrix information of the SU-MIMO mode is ten sub-frames, is received. Further details of the step S506 are similar to those of the step S404 in Fig.4, and a detailed description thereof will be omitted here.

In an instance, the feedback parameter(s) can be set according to channel characteristics or system requirements or resources available to the system. For example, in the case of a limited feedback channel resource, the feedback period for the pre-coding matrix information of the SU-MIMO mode can be set relatively short and the feedback period for the pre-coding matrix information of the MU-MIMO mode and/or the multi-cell MIMO mode can be set relatively long.

In the embodiments illustrated in Fig.4 and Fig.5, if a feedback parameter is predetermined, then it is not necessary for the base station to transmit the feedback parameter, thereby saving a system resource. If the feedback parameter is not predetermined, then the feedback parameter can vary dynamically, which is flexible.

Fig.6 is a block diagram of a mobile station 600 according to an embodiment of the present invention. The mobiles station 600 includes: a determining unit 602 configured to determine multiple kinds of pre-coding matrix information corresponding to multiple multi-input multi-output modes; and a feedback unit 604 configured to feed back the plurality of kinds of pre-coding matrix information. Optionally the feedback unit 604 is configured to feed back the plurality of kinds of pre-coding matrix information sequentially in a predetermined feed back order. Optionally the feedback unit 604 is configured to feed back the plurality of kinds of pre-coding matrix information at a predetermined feedback interval. Optionally the feedback unit 604 is configured to feed back the plurality of kinds of pre-coding matrix information at a predetermined feedback period. Optionally the plurality of kinds of pre-coding matrix information is fed back at the same or different periods. Optionally the plurality of multi-input multi-output modes are selected from a group consisted of a single-user multi-input multi-output mode, a multi-user multi-input multi-output mode and a multi-cell multi-input multi-output mode. How to achieve the functions of the respective components of the mobile station illustrated in Fig.6 will become apparent upon review of the operation process of the method of feeding back pre-coding matrix information according to the embodiments of the invention, so how to achieve the functions of the foregoing respective components will not be described here in details for the sake of conciseness of the description.

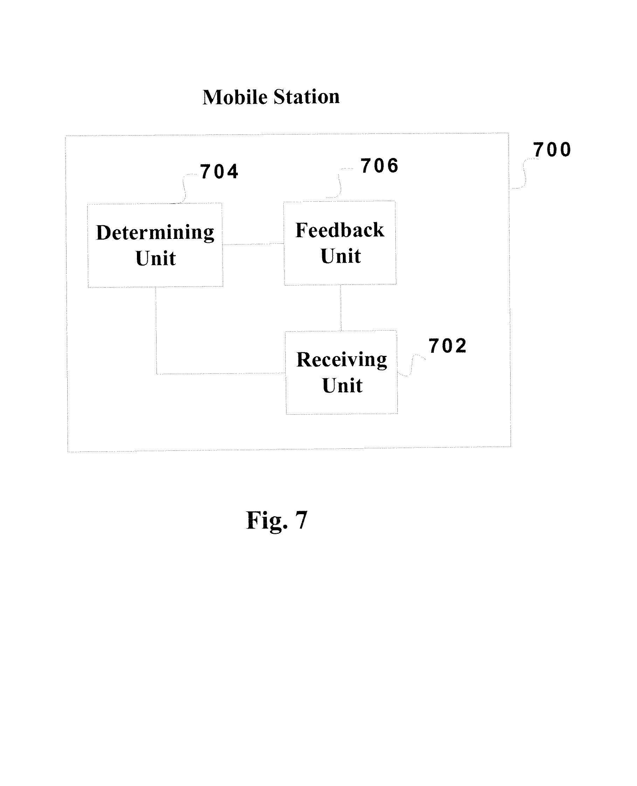

Fig.7 is a block diagram of a mobile station 700 according to another embodiment of the invention. The mobile station 700 includes: a receiving unit 702 configured to receive one or more of multi-input multi-output mode information, a feedback order, a feedback interval and a feedback period as feedback parameter(s); a determining unit 704 configured to determine multiple kinds of pre-coding matrix information corresponding to multiple multi-input multi-output modes; and a feedback unit 706 configured to feed back the plurality of kinds of pre-coding matrix information according to the received feedback parameter(s). How to achieve the functions of the respective components of the mobile station illustrated in Fig.7 will become apparent upon review of the operation process of the method of feeding back pre-coding matrix information according to the embodiments of the invention, so how to achieve the functions of the foregoing respective components will not be described here in details for the sake of conciseness of the description.

In the embodiments of the invention, the mobiles station feeds back two or more PMIs for each of the various MIMO modes, and thus a uniform PMI feedback format can be designed so that it is not necessary for the mobile station to adopt differently adapted feedback information formats according to the MIMO modes.

For example, a feedback format depicted in Table 1 below can be adopted.

| Feedback information type | Meaning | The number of bytes |
|---|---|---|
| MIMO feedback mode 1 | Feedback for SU-MIMO mode | x |
| MIMO feedback mode 2 | Feedback for MU-MIMO mode 1 | x |
| MIMO feedback mode 3 | Feedback for MU-MIMO mode 2 | x |
| MIMO feedback mode 4 | Feedback for multi-cell MIMO mode 1 | x |
| MIMO feedback mode 5 | Feedback for multi-cell MIMO mode 2 | x |
| MIMO feedback mode 6 | Feed back PMI1 for multi-PMI concatenated pre-coding | x |
| MIMO feedback mode 7 | Feed back PMI2 for multi-PMI concatenated pre-coding | x |
| ... | ... | ... |

In Table 1, X is any preset number. X can be different for different MIMO modes in an instance. Thus with such a uniform feedback format, the mobile station can feed back various kinds of pre-coding matrix information to the base station in the same feedback format for the purpose of simplifying a feedback signaling overhead. Reference can be made, for example, to Chinese Patent Application No. 200910141651.1, filled on May 25, 2009 and entitled "一种用于 MIMO 系统的预编码 反馈方法和装" for further details of the feedback format.

The operation and the structure of the mobile station have been described above. An operation and a structure of a base station correspond to those of the mobile station. In an embodiment, for example, a base station can include a receiving unit configured to receive multiple kinds of pre-coding matrix information, which corresponds to multiple multi-input multi-output modes and is fed back from a mobile station. In an embodiment, a base station can include: a transmitting unit configured to transmit one or more of multi-input multi-output mode information, a feedback order, a feedback interval and a feedback period to a mobile station as feedback parameter(s); and a receiving unit configured to receive multiple kinds of pre-coding matrix information fed back from the mobile station according to the feedback parameter(s). Details of the operation and the structure of the base station will become apparent to those skilled in the art upon review of the foregoing description, so a detailed description thereof will be omitted here.

Those ordinarily skilled in the art can appreciate that all or any of the steps or the components of the inventive methods and apparatuses can be embodied in any computing device (including a processor, a storage medium, etc.) or network of computing devices in hardware, firmware, software or combination thereof, and this can be realized by those ordinarily skilled in the art upon review of the description of the invention in conjunction with their general programming skills, and thus a detailed description thereof will be omitted here.

Thus based upon the foregoing understanding, the object of the invention can also be attained by running a program or a set of programs on any information processing device which can be a well-known general-purpose device. Thus the object of the invention can also be attained by providing only a program product containing program codes to embody the methods or the apparatuses. Stated otherwise, such a program product also constitutes the invention, and a storage medium in which such a program product is stored also constitutes the invention. Apparently the storage medium can be any well-known storage medium or any storage medium to be developed in the future, so it is not necessary to enumerate various storage mediums here.

In the methods and apparatuses of the invention, the respective components or the respective steps apparently can be decomposed, combined and/or decomposed and then recombined. These decomposition, combination and/or recombination shall be regarded as equivalents of the invention.

The preferred embodiments of the invention have been described above. Those ordinarily skilled in the art can appreciate that the scope of the invention will not be limited to the specific details disclosed here but can be susceptible to various variations and equivalents coming into the spirit and scope of the invention.

**Claims**

1. A method of feeding back pre-coding matrix information in a wireless communication system, comprising:

   determining multiple kinds of pre-coding matrix information corresponding to multiple multi-input multi-output modes; and
   feeding back the plurality of kinds of pre-coding matrix information.

2. The method according to claim 1, wherein feeding back the plurality of kinds of pre-coding matrix information comprises feeding back the plurality of kinds of pre-coding matrix information sequentially in a predetermined feedback order.

3. The method according to claim 1, wherein feeding back the plurality of kinds of pre-coding matrix information comprises feeding back the plurality of kinds of pre-coding matrix information at a predetermined feedback interval.

4. The method according to claim 1, wherein feeding back the plurality of kinds of pre-coding matrix information comprises feeding back the plurality of kinds of pre-coding matrix information at a predetermined feedback period.

5. The method according to claim 4, wherein the feedback periods of the plurality of kinds of pre-coding matrix information are the same or different.

6. The method according to claim 1, further comprising:

   receiving one or more of multi-input multi-output mode information, a feedback order, a feedback interval and a feedback period as feedback parameter(s); and
   feeding back the plurality of kinds of pre-coding matrix information comprises feeding back the plurality of kinds of pre-coding matrix information according to the received feedback parameter(s).

7. The method according to claim 1, wherein the plurality of multi-input multi-output modes are selected from a group consisted of a single-user multi-input multi-output mode, a multi-user multi-input multi-output mode and a multi-cell multi-input multi-output mode.

8. A mobile station, comprising:

   a determining unit configured to determine multiple kinds of pre-coding matrix information corresponding to multiple multi-input multi-output modes; and
   a feedback unit configured to feed back the plurality of kinds of pre-coding matrix information.

9. The mobile station according to claim 8, wherein the feedback unit is configured to feed back the plurality of kinds of pre-coding matrix information sequentially in a predetermined feed back order.

10. The mobile station according to claim 8, wherein the feedback unit is configured to feed back the plurality of kinds of pre-coding matrix information at a predetermined feedback interval.

11. The mobile station according to claim 8, wherein the feedback unit is configured to feed back the plurality of kinds of pre-coding matrix information at a predetermined feedback period.

12. The mobile station according to claim 11, wherein the feedback periods for the plurality of kinds of pre-coding matrix information are the same or different.

13. The mobile station according to claim 8, further comprising:

   a receiving unit configured to receive one or more of multi-input multi-output mode information, a feedback order, a feedback interval and a feedback period as feedback parameter(s); and
   the feedback unit is configured to feed back the plurality of kinds of pre-coding matrix information according to the received feedback parameter(s).

14. The mobile station according to claim 8, wherein the plurality of multi-input multi-output modes are selected from a group consisted of a single-user multi-input multi-output mode, a multi-user multi-input multi-output mode and a multi-cell multi-input multi-output mode.

PMI1    PMI2

$$\begin{bmatrix} w_{11} & w_{21} \\ w_{12} & w_{22} \end{bmatrix} \cdot \begin{bmatrix} s_1 \\ s_2 \end{bmatrix}$$

MIMO Channel

[PMI1, PMI 2]

**Base Station**                    **Mobile Station**

# Fig. 1

PMI1   PMI2

$$\begin{bmatrix} w_{11} & w_{21} \\ w_{12} & w_{22} \end{bmatrix} \cdot \begin{bmatrix} s_1 \\ s_2 \end{bmatrix}$$

[PMI3, PMI4]

MIMO
Channel 2

MIMO Channel 1

Base
Station

Mobile Station B

[PMI1, PMI2]

Mobile Station A

**Fig. 2**

**Fig. 3**

S402 | Determine multiple kinds of pre-coding matrix information corresponding to multiple multi-input multi-output modes

S404 | Feed back multiple kinds of pre-coding matrix information

**Fig. 4**

**S502** Receive feedback parameter(s)

**S504** Determine multiple kinds of pre-coding matrix information corresponding to multiple multi-input multi-output modes

**S506** Feed back multiple kinds of pre-coding matrix information according to the received feedback parameter(s)

**Fig. 5**

**Mobile Station**

600

602 604

| Determining Unit | Feedback Unit |

**Fig. 6**

**Mobile Station**

**Fig. 7**

| INTERNATIONAL SEARCH REPORT | International application No. |
|---|---|
| | PCT/CN2010/072344 |

**A. CLASSIFICATION OF SUBJECT MATTER**

H04W 72/08(2009.01)i

According to International Patent Classification (IPC) or to both national classification and IPC

**B. FIELDS SEARCHED**

Minimum documentation searched (classification system followed by classification symbols)

IPC: H04W, H04Q,H04L,H04B,H04M

Documentation searched other than minimum documentation to the extent that such documents are included in the fields searched

Electronic data base consulted during the international search (name of data base and, where practicable, search terms used)

CNPAT,CNKI,WPI,EPODOC,GOOGLE：MIMO，multi-input multi-output, precoding matrix, precoding matrix index, feedback, feed back, single user, SU-MIMO, multiple user, multi-user, MU-MIMO, multiple

**C. DOCUMENTS CONSIDERED TO BE RELEVANT**

| Category* | Citation of document, with indication, where appropriate, of the relevant passages | Relevant to claim No. |
|---|---|---|
| A | CN101496439A （FUJITSU LTD.）<br>29 Jul. 2009(29.07.2009) the whole document | 1-14 |
| A | CN101399631A （ZTE COMMUNICATION CO., LTD.）<br>01 Apr. 2009(01.04.2009) the whole document | 1-14 |
| A | CN101656601A （HUAWEI TECHNOLOGIES CO., LTD.）<br>24 Feb. 2010(24.02.2010) the whole document | 1-14 |
| A | WO2008/030035A2 （LG ELECTRONICS INC. et al.）<br>13 Mar. 2008(13.03.2008) the whole document | 1-14 |
| A | US2007/0249401A1 （KIM, Sung-Jin et al.）<br>25 Oct. 2007(25.10.2007) the whole document | 1-14 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 10 Jan. 2011 (10.01.2011) | **17 Feb. 2011 (17.02.2011)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>GAO, Xia<br>Telephone No. (86-10)62413536 |

Form PCT/ISA /210 (second sheet) (July 2009)

## INTERNATIONAL SEARCH REPORT
### Information on patent family members

| | International application No. |
|---|---|
| | PCT/CN2010/072344 |

| Patent Documents referred in the Report | Publication Date | Patent Family | Publication Date |
|---|---|---|---|
| CN101496439A | 29.07.2009 | WO2009026770A1 | 05.03.2009 |
| | | EP2078443A1 | 15.07.2009 |
| | | KR20090076947A | 13.07.2009 |
| | | US2010103832A1 | 29.04.2010 |
| | | JP2010537597T | 02.12.2010 |
| CN101399631A | 01.04.2009 | None | |
| CN101656601A | 24.02.2010 | None | |
| WO2008/030035A2 | 13.03.2008 | KR20080022031A | 10.03.2008 |
| | | KR20080022033A | 10.03.2008 |
| | | EP2067276A2 | 10.06.2009 |
| US2007/0249401A1 | 25.10.2007 | KR100735373B1 | 04.07.2007 |

Form PCT/ISA /210 (patent family annex) (July 2009)

**REFERENCES CITED IN THE DESCRIPTION**

**Patent documents cited in the description**

- CN 200910141651